# EUROPÄISCHE PATENTSCHRIFT

(11) **EP 1 929 154 B1**
(45) Veröffentlichungstag und Bekanntmachung des Hinweises auf die Patenterteilung: **17.06.2009**
(21) Anmeldenummer: 06793367.1
(22) Anmeldetag: 08.09.2006
(51) Int. Cl.: F04B 1/04, F04B 53/12, F04B 53/14

(54) **KOLBENPUMPE**
PISTON PUMP
POMPE A PISTON

(30) Priorität: 14.09.2005 DE 102005043724; 08.03.2006 DE 102006010674
(43) Veröffentlichungstag der Anmeldung: 11.06.2008
(73) Patentinhaber: Continental Teves AG & Co. oHG, 60488 Frankfurt am Main (DE)
(72) Erfinder: SONNENSCHEIN, Georg, 65760 Eschborn (DE); OBERSTEINER, Georg, 65510 Idstein (DE); UHLMER, Jürgen, 63762 Grossostheim (DE); POSSMANN, Achim, 64291 Darmstadt (DE); HETTRICH, Andreas, 63486 Bruchköbel (DE)
(74) Vertreter: Neumann, Stephan
(86) Internationale Anmeldenummer: PCT/EP2006/066184
(87) Internationale Veröffentlichungsnummer: WO 2007/031472

(56) Entgegenhaltungen:
- WO-A-00/65234
- WO-A-99/06702
- WO-A-99/58853
- DE-A1- 19 712 147
- DE-A1- 19 747 850
- JP-A- 6 011 044

## Beschreibung

Die Erfindung betrifft eine Kolbenpumpe mit den Merkmalen des Oberbegriffs des Patentanspruchs 1.

Moderne Kolbenpumpen zur Anwendung in Kraftfahrzeug-Fahrdynamikregelsystemen leiden unter der Problematik, dass es neue Funktionen erfordern, die Pumpe mit erweiterter Lebensdauer und in erweitertem Maße gegen einen hohen Systemdruck in Betrieb zu nehmen. Dabei kann der Systemdruck prinzipiell sowohl auf der Saugseite, als auch auf der Druckseite der Kolbenpumpe vorliegen. Diese Problematik tritt zum Beispiel ein, wenn eine elektrohydraulische Parkbremse vorgesehen ist, bei der die Parkbremsfunktion durch einen Druckpuls der Pumpe gelöst werden soll.

Derartige Gegebenheiten und Randbedingungen stellen erhöhte Anforderungen an die Komponenten der Pumpe wie insbesondere an die verwendeten Dichtelemente. Dabei ist deren Resistenz gegen Verschleiß und Spaltextrusion von besonderem Interesse.

Bei Spaltextrusion wird ein niederdruckseitiger Rücken von einem Dichtungskörper als Folge der herrschenden Druckdifferenz in einen Spalt gezwängt. Zur Vermeidung dieses Effektes soll der Dichtungskörper ein gewisses Spaltüberbrückungsvermögen bzw. einen gewissen Scherwiderstand aufweisen. Sofern der Scherwiderstand nicht ausreicht, wandert der Dichtungsrücken in den Spalt und wird dort zerstört. Dieser Vorgang wird noch dadurch unterstützt, dass sich die Aufnahmebohrung für den Kolben unter dem Innendruck zumindest geringfügig aufweitet, und bei Entlastung wieder schlagartig zusammenzieht. Der quasielastische Atmungsprozess bewirkt, dass sich der im Spalt befindliche Dichtungswerkstoff insbesondere bei Tieftemperaturen nicht rechtzeitig rückverformen kann. Dadurch können am Dichtkörper so genannte Extrusionsfahnen entstehen, die sich mit fortlaufender Anwendungsdauer verlängern. Im Endstadium kommt es zum Ausfall der Dichtung, da durch veränderte Radialspannungsverteilungen im Dichtkörper keine hinreichende Dichtfunktion gewährleistet ist. Die wesentlichen Einflüsse für die Spaltextrusion sind der radial abzudichtende Spalt "S", der Systemdruck "P", die radiale Profilbreite des Dichtkörpers "T", der Nenndurchmesser "d" und die Betriebstemperatur "T" und die Elastizität des Dichtungskörpers "E". Das Extrusionsverhalten ist durch Konzeption aller genannten Größen beeinflussbar. Bei thermischer Belastung sind im wesentlichen jedoch die physikalischen Werkstoffeigenschaften der Dichtung ausschlaggebend.

Für Dichtungskörper werden vielfach thermoplastische Elastomere wie EPDM, Thermoplaste wie beispielsweise PTFE wie auch Werkstoffe verwendet, die zur Gruppe der thermoplastischen Urethane gehören. Dabei ändern sich die physikalischen Werkstoffeigenschaften mit steigender Temperatur zu ungunsten der Extrusionssicherheit. Üblicherweise können TPU-Werkstoffe (Thermoplastische Polyurethane) bis zu 100 °C bestehen. EPDM und PTFE bis über etwa 120 °C. Dabei ist der Systemdruck limitiert, so dass eine Kombination von maximaler Temperatur bei maximalem Druck zu vermeiden ist. Alternativ ist für derartige Fälle der Gleitspalt "S" zu reduzieren, was bei Serienfertigung deutliche betriebswirtschaftliche Konsequenzen bedeutet.

Gemäß dem Abstrakt der JP 2000-110737 ist ein Kolben mit einer Ringnut versehen, in die eine Ringdichtung eingebracht ist, welche dynamisch an einer Zylinderwandung abdichtet. Zur konstruktiven Erhöhung der Extrusions-Resistenz wird vorgeschlagen, einen Ringspalt am Dichtungsrücken zwischen einem Kolben und einer Kolbenaufnahme stark erweitert sowie mit einem sich keilförmig verjüngenden Profil auszubilden. Die Intention dieser Vorgehensweise besteht darin, dem Dichtungskörper einen erweiterten Deformationsraum zur Verfügung zu stellen, in den er elastisch eintreten und auch wieder austreten kann.

Bei der vorbekannten Maßnahme wird eine potentielle Scherbeschädigung am Dichtkörper vermieden, indem eine verringerte Unterstützung des Dichtungskörpers innerhalb der Nut in Kauf genommen wird. Dies kann zu einer Verringerung der Dichtwirkung und auch zu einer Reduktion der Führungsfunktion führen. Denn eine Ausdehnung des Dichtungskörpers in den keilförmigen Spalt hinein führt zu einer Reduktion vom Anpressdruck zwischen Zylinder und Dichtungskörper.

Aus der WO 99/06702 A geht eine Kolbenpumpe mit den Merkmalen des Oberbegriffs des Patentanspruchs 1 hervor. Das Dichtungselement ist permanent über ein Federelement derart beaufschlagt, dass stets eine axial spielfreie Platzierung auf dem Sitz vorliegt, und eine permanente, radial gerichtete Spreizwirkung vorliegt.

Es ist die Aufgabe der vorliegenden Erfindung, eine global verbesserte Abstimmung zu ermöglichen, damit bei verbesserter Anpassung der Dichtung hinsichtlich Dichtwirkung und Reibungswiderstand eine erhöhte Pumpenlebensdauer und eine erhöhte Spaltextrusionsresistenz ermöglicht wird.

Zur Lösung der Aufgabe werden die kennzeichnenden Merkmale des Patentanspruchs 1 vorgeschlagen. Eine weitere Lösung des Problems ist dem Patentanspruch 2 entnehmbar.

Bei einer vorteilhaften Ausgestaltung der Erfindung ist vorgesehen, dass der Sitz für den Dichtungskörper eine Struktur mit einer intermittierenden Auflagefläche für den Dichtungskörper aufweist. Die Struktur weist bevorzugt relative Maxima sowie relative Minima auf, wobei die relativen Maxima sowie die relativen Minima in Umfangsrichtung und/oder parallel zur Kolbenachse in regelmäßigem oder unregelmäßigem Abstand abwechselnd angeordnet sind. Es ist möglich, dass die Maxima ringförmig umlaufend an dem Sitz ausgebildet sind, und dass die Minima durch Nuten gebildet sind, die sich parallel oder konzentrisch zur Kolbenachse erstrecken.

Besonders wirkungsvolle Varianten der Erfindung zeichnen sich aus, indem der Sitz Mittel aufweist, die mit zunehmendem hydraulischen Druck einen zunehmenden Dichtungsanpressdruck ermöglichen, und umgekehrt, wobei die Mittel insbesondere kanalartig ausgebildet und zum Arbeitsraum offen sind, und insbesondere in die Struktur integriert ausgebildet sind. Dadurch wird eine Selbstregulierung des Dichtungsanpressdruck erzielt, und eine Erhöhung der Dichtpressung wird nur vorgenommen, wenn dies wegen dem Druck im Arbeitsraum erforderlich ist.

Weitere Einzelheiten der Erfindung gehen aus nachfolgender Beschreibung anhand der Zeichnung hervor. In der Zeichnung zeigt:
Fig. 1 ein Schnitt durch eine Kolbenpumpe in stark vergrößertem Maßstab, sowie eine Einzelheit vergrößert,
Fig. 2 eine erste Ausführungsform, im Schnitt, in größerem Maßstab,
Fig. 3 eine zweite Ausführungsform, im Schnitt, in größerem Maßstab,
Fig. 4 eine dritte Ausführungsform, im Schnitt, in größerem Maßstab,
Fig. 5 eine vierte Ausführungsform mit einem Klemmkonus im Schnitt, in größerem Maßstab,
Fig. 6 ein Ende eines Kolbens gemäß Fig. 5 vergrößert, und Fig. 7 ein Kolben mit einer Lippendichtung, im Schnitt in größerem Maßstab.

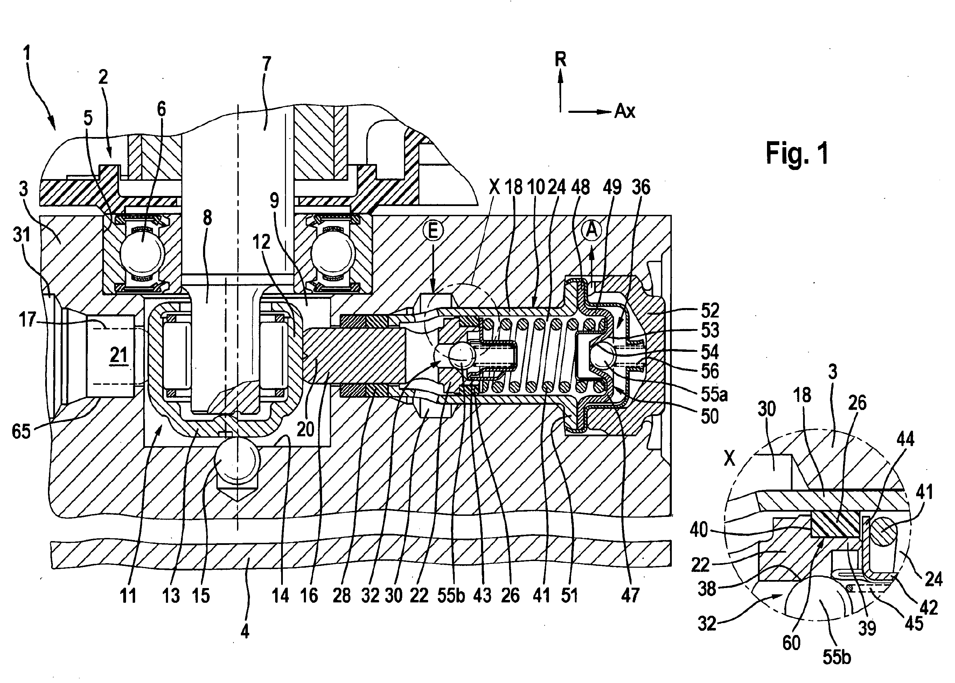

Die Fig. 1 zeigt ein Aggregat 1 mit einem angedeutet skizzierten Antrieb 2, insbesondere ein Elektromotor, welcher an einem Aufnahmekörper 3 für elektromagnetisch betätigbare Ventile, Kanäle, Speicher- oder Dämpferkammern sowie eine Kolbenpumpe 10 angeflanscht ist. Auf einer gegenüberliegenden Seite des Aufnahmekörpers 3 ist eine lediglich schematisch verdeutlichte, elektronische Regeleinheit 4 vorgesehen. Das dargestellte Aggregat 1 dient insbesondere der Schlupf- oder Fahrstabilitätsregelung von Kraftfahrzeugen, wobei ähnliche oder andere Anwendungsfälle möglich sind.

Eine vorzugsweise zentrale Stufenbohrung 5 des Aufnahmekörpers 3 nimmt ein abgedichtetes Wälzlager 6 der Antriebswelle 7 auf, deren freies Ende als Exzenter 8 ausgebildet ist, und in einen Kurbelraum 9 der Stufenbohrung 5 hineinragt. Prinzipiell ist es möglich, dass der Exzenter 8 unmittelbar an die Antriebswelle 7 oder Motorwelle angeschliffen, oder als gesondertes Bauelement ausgebildet und an der Antriebswelle 7 befestigt ist. Für erhöhte Pumpenlaufdauer, kann der Kurbelraum 9 mit Leckageflüssigkeit, insbesondere mit Bremsflüssigkeit geflutet sein, wobei ein an den Kurbelraum 9 angeschlossenes Reservoir zur Flüssigkeitsaufnahme innerhalb dem Antrieb 2, innerhalb dem Aufnahmekörper 3, innerhalb der Regeleinheit 4, oder in abgegrenzten Bereichen zwischen diesen Bauteilen, dient.

Der Exzenter 8 ist mit einem einseitig durch einen topfförmigen Aussenring 12 geschlossenes Nadellager 11 versehen, dessen Topfboden 13 mit einem warzenförmigen Vorsprung punktuell sowie reibungsarm an einer Stirnseite der Antriebswelle 7 anlegbar ist. Ein Boden 14 des Kurbelraumes 9 verfügt über eine Kugel 15, so dass der Topfboden 13 mit einer motorwellenabgewandten Außenseite reibungsarm an der Kugel 15 anliegt, und der relativ zu dem Aufnahmekörper 3 verdrehbare Außenring 12 keinen unmittelbaren Kontakt zu dem Werkstoff des Aufnahmekörpers 3 aufweist. Dadurch wird einer Reibungsbeanspruchung des Aufnahmekörpers 3 entgegengetreten, ohne verschleißresistente Werkstoffbeschichtungen, wie Eloxierungen auf Wandungen eines Aluminium-Aufnahmekörpers 3 aufbringen zu müssen.

Wie aus Fig. 1 hervorgeht, können mehrere Kolben 16,17 beispielsweise einander gegenüberliegend, sternförmig oder irgendwie andersartig angeordnet sein.

Jeder Kolben 16,17 ist innerhalb einer Stufenbohrung bewegbar entweder in einer gesonderten Laufbuchse 18, oder direkt in der Stufenbohrung vom Aufnahmekörper 3 geführt, angeordnet. Die Kolben 16,17 durchgreifen mit einem ersten hydraulischen Durchmesser einen Zylinder umfassend einen Nachlaufraum 30,31, reichen mit einem Ende 20,21 in den Kurbelraum 9 und kontaktieren dort einen Umfang des Aussenrings 12. Ein anderes Ende 22 vom Kolben 16 weist zur Ausbildung eines Stufenkolbens einen anderen, zweiten hydraulisch wirksamen Durchmesser auf und ragt in einen Verdrängungsraum 24. Während das zweite Ende 22 der Kolben 16,17 über einen Dichtungs- und Dichtungskörper 26 in der Laufbuchse 18 abgedichtet geführt ist, ermöglicht eine weitere Führungs- und Dichtungsanordnung 28 die Anordnung des Nachlaufräumes 30,31 zwischen der besagten Dichtungsanordnung 28 und einem, als Saugventil wirksamen Rückschlagventil 32. Von einem Druckmitteleinlaß E gelangt das Druckmittel über einen Kanal und vorzugsweise ein an einer Hülse vorgesehenen Filter in den Nachlaufraum 30,31. Im Ansaugtakt gelangt das Druckmittel bei geöffnetem Rückschlagventil (Saugventil) 32 in den Verdrängungsraum 24 und im Verdrängungstakt bei geöffnetem Rückschlagventil (Druckventil) 36 in einen Druckmittelauslaß A. Es bleibt hinzuzufügen, dass der wirksame hydraulische Kolbendurchmesser in dem Verdrängungsraum 24 zusammen mit dem hydraulisch wirksamen Durchmesser im Nachlaufraum 30,31 verbesserte Ansaugeigenschaften bei zählflüssigem Druckmittel ermöglicht.

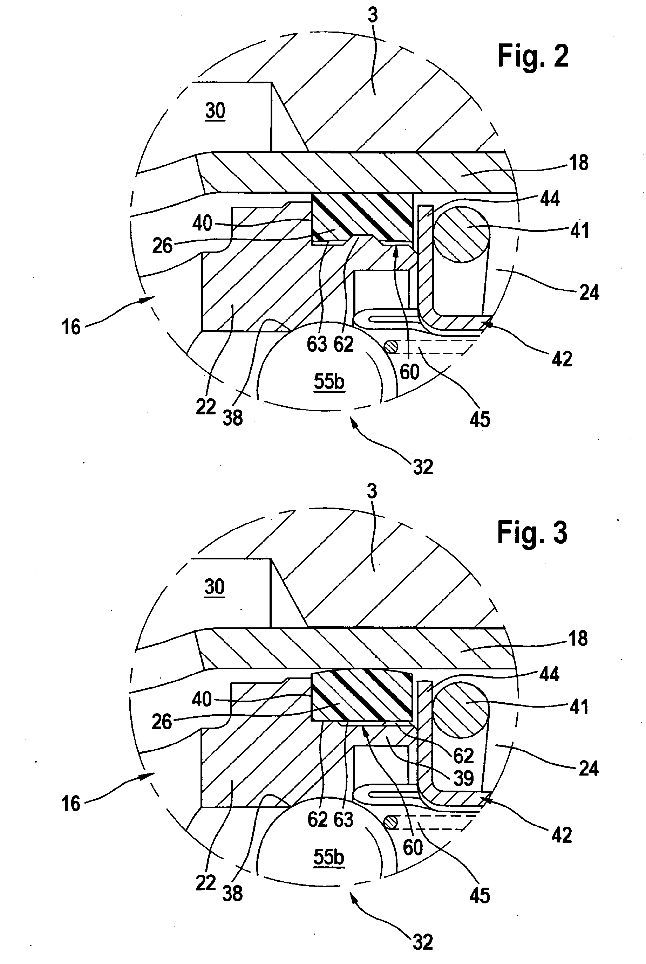

Das stufenförmig abgesetzte Ende 22 des Kolbens 16 verfügt über einen Ventilsitz 38 für einen federvorgespannten Ventilkörper 55 b. Ein zylindrischer Wandungsteil 39 des Kolbens 16 befindet sich am Ende 22, und trägt auf einer Außenseite den Dichtungskörper 26. Zur axialen Lagesicherung des Dichtungskörpers 26 weist der Ventilsitz 38 einen Anschlag 40 auf. Ein gleichzeitig als Federteller für eine Kolben-Rückstellfeder 41 und eine Ventilfeder 45 wirksames Bauteil 42 - oder wie exemplarisch in Fig. 2 ein separater Federteller - liegt mit einem Schulterbereich von axial abgekröpften Schenkeln 43 an einer Vorderseite vom Wandungsteil 39 auf. Radiale Schenkel 44 können eine axiale Relativverschiebung des Dichtungskörpers 26 vermeiden, so dass dieser im wesentlichen an dem Kolben 16 festgelegt ist, und mit diesem relativ zu dem Aufnahmekörper 3 oszilliert. Axial gerichtete Schenkel können den Dichtungskörper 26 untergreifen, um einen strukturierten Sitz 60 auszubilden.

Die Kolben-Rückstellfeder 41 erstreckt sich durch den gesamten Verdrängungsraum 24 und liegt mit einem Ende an einem kolbenfernen Widerlager 47 an, welches gleichzeitig als Boden für die Laufbuchse dient. Gemäß der Ausführungsform nach Fig. 1 ist die Laufbuchse 18 napfförmig und das Widerlager 47 ist als tellerförmig ausgestülptes Bauteil ausgebildet, welches über einen Radialflansch 48, eine zylindrische Wandung 49 sowie einen grundsätzlich ebenen Bodenbereich 50 verfügt. Wie zu ersehen ist, liegt der Radialflansch 48 flach an einem Radialflansch 51 der Laufbuchse 18 an. Während die Wandung 49 zylindrisch verläuft, weist der Bodenbereich 50 einen in Richtung Kolben 16 weisenden Kragen 53 mit einem Sitz 54 für einen Ventilkörper 55 a des Rückschlagventils (Druckventil) 36 auf. Folglich dient ein zwischen Kragen 53 und Wandung 49 vorgesehener Raum der Aufnahme der Rückstellfeder 41, und eine durch den Kragen 53 gebildete Ausstülpung nimmt wesentliche Teile des Rückschlagventils 36 wie insbesondere Ventilkörper 55 a und Ventilfeder 56 auf. Die genannten Bauteile sind dadurch so ineinander angeordnet, dass sie sich in Radialrichtung R zumindest teilweise überschneiden, wodurch Bauraum eingespart wird. Wie weiterhin aus den Fig. 1 und 2 erhellt, weist der Kragen 53 eine weitgehend konische Form auf. Sein (Außen)Durchmesser entspricht anfänglich im wesentlichen dem (Innen-)Durchmesser der Rückstellfeder 41, um sich anschließend in Richtung Sitz 54 zu verjüngen. Dadurch wird eine verbesserte Rückstellfederzentrierung - insbesondere während der Montage - erreicht.

Eine Besonderheit der Kolbenpumpe besteht darin, dass ein Sitz 60 für den Dichtungskörper 26 mit einer Struktur versehen ist, welche radial zu einer Kolbenachse gerichtete, und den Dichtungskörper 26 radial aufweitende Kräfte erzeugt, und dass die Struktur eine elastische Deformation des Dichtungskörpers 26 für einen verstärkten und dosierten Dichtungsanpressdruck zwischen Kolben 16,17 und Zylinder bewirkt. Dabei sind die Maße von Sitz 60, Dichtungskörper 26 und Zylinder aufeinander abgestimmt, indem der Dichtungskörper 26 mit Übermaß derart toleriert ausgebildet ist, um klemmkraftfrei auf seinem Sitz 60 angeordnet zu werden, und dass mindestens eine weitere Tolerierung derart vorgesehen ist, dass bei Anordnung von dem Kolben 16 mit Dichtungskörper 26 im Zylinder eine fluiddichte elastische Klemmung zwischen Zylinder, Dichtungskörper 26 und Kolben 16 vorgesehen ist.

Die Figuren 2 und 3 verdeutlichen Kolbenpumpen, bei denen der Sitz 60 eine Struktur mit einer intermittierenden Auflagefläche für den Dichtungskörper 26 aufweist. Dabei verfügt die Struktur von dem Sitz über relative Maxima 62 sowie über relative Minima 63, wobei die relativen Maxima 62 sowie die relativen Minima 63 in Umfangsrichtung und/oder parallel zur Kolbenachse in regelmäßigem oder unregelmäßigem Abstand abwechselnd angeordnet sind. Dabei können die Maxima 62 ringförmig umlaufend an dem Sitz 60 ausgebildet sein, oder sie erstrecken sich parallel oder konzentrisch zur Kolbenachse.

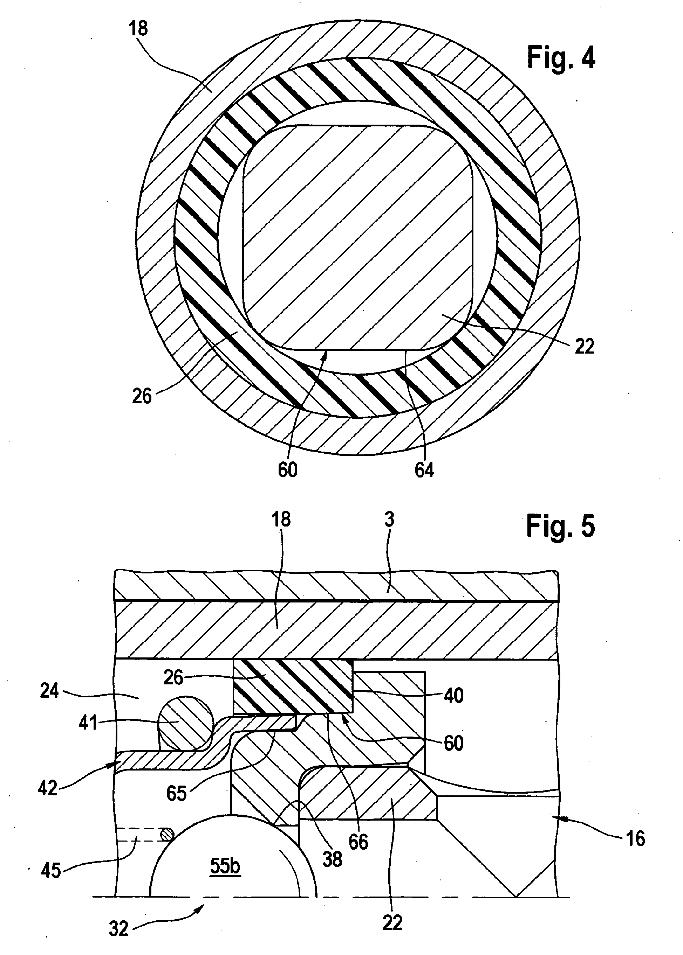

Bei der Ausführungsform nach Fig. 4 ist der Sitz 60 als abgerundeter Mehrkant 64 ausgebildet.

Aus der Fig. 5 geht eine Ausführungsform hervor, bei der der Sitz 60 wenigstens zwei Abschnitte 65,66 aufweist, von denen ein erster Sitzabschnitt im wesentlichen zylindrisch oder strukturiert ausgebildet ist, und wobei ein zweiter Sitzabschnitt konifiziert ausgebildet ist.

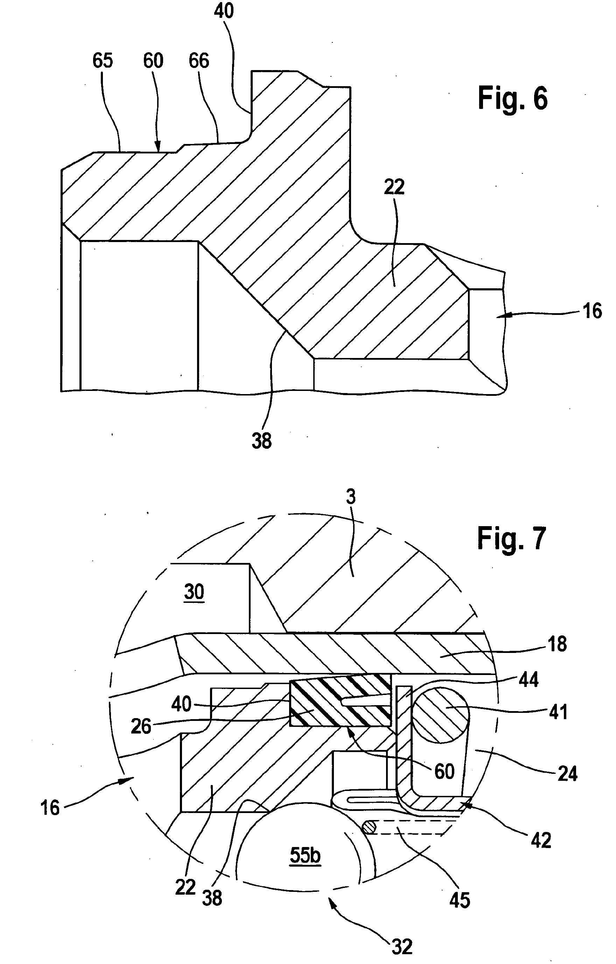

Alle Ausführungsformen können prinzipiell mit Mitteln ausgerüstet sein, die mit zunehmendem hydraulischen Druck einen zunehmenden Dichtungsanpressdruck ermöglichen, und umgekehrt. Die Mittel sind kanalartig, zum Verdrängungsraum 24,25 offen, sowie in der Struktur integriert ausgebildet. Bei der Ausführungsform nach Fig. 7, ist als Mittel ein in Form einer Lippendichtung ausgebildeter Dichtungskörper 26 vorgesehen.

### Bezugszeichenliste:

- 1: Aggregat
- 2: Antrieb
- 3: Aufnahmekörper
- 4: Regeleinheit
- 5: Stufenbohrung
- 6: Wälzlager
- 7: Antriebswelle
- 8: Exzenter
- 9: Kurbelraum
- 10: Kolbenpumpe
- 11: Nadellager
- 12: Außenring
- 13: Topfboden
- 14: Boden
- 15: Kugel
- 16: Kolben
- 17: Kolben
- 18: Laufbuchse
- 20: Ende
- 21: Ende
- 22: Ende
- 24: Verdrängungsraum
- 26: Dichtungskörper
- 28: Dichtungsanordnung
- 30: Nachlaufraum
- 31: Nachlaufraum
- 32: Rückschlagventil
- 36: Rückschlagventil
- 38: Ventilsitz
- 39: Wandungsteil
- 40: Anschlag
- 41: Rückstellfeder
- 42: Bauteil
- 43: Schenkel
- 44: Schenkel
- 45: Ventilfeder
- 47: Widerlager
- 48: Radialflansch
- 49: Wandung
- 50: Bodenbereich
- 51: Radialflansch
- 52: Verschluß
- 53: Kragen
- 54: Sitz
- 55a,b: Ventilkörper
- 56: Ventilfeder
- 60: Sitz
- 62: Maximum
- 63: Minimum
- 64: Mehrkant
- 65: Abschnitt
- 66: Abschnitt
- E: Einlaß
- A: Auslaß
- Ax: Axialrichtung
- R: Radialrichtung

## Patentansprüche

1. Kolbenpumpe (10), zur hydraulischen Energieversorgung in einer geregelten Fahrzeugbremsanlage mit den Merkmalen:
ein Kolben (16,17) ist in einem Zylinder einer, mit einem Verschluss (52) versehenen, Stufenbohrung (64) eines Aufnahmekörpers (3) bewegbar angeordnet,
der Kolben (16,17) ist zumindest teilweise hohl mit einem Rohrabschnitt ausgebildet, und trägt einen Ventilsitz für wenigstens ein, zumindest teilweise in dem Hohlabschnitt angeordnetes, Rückschlagventil (32,33,36,37), das der Ventilation eines Arbeitsraumes (24,25) dient,
der Kolben (16,17) trägt einen Sitz (60) für einen elastischen Dichtungskörper (26), welcher den Dichtungskörper (26) mit radialer elastischer Vorspannung zwecks Abdichtung zwischen Kolben (16,17) und Zylinder aufnimmt, eine Rückstellfeder (41) ist in dem Zylinder vorgesehen, und beaufschlagt einerseits ein Widerlager (47) und andererseits den Kolben (16,17),
der Sitz (60) für den Dichtungskörper (26) ist mit einer Struktur versehen, die radial zu einer Kolbenachse gerichtete, und den Dichtungskörper (26) radial aufweitende Kräfte erzeugt, und dass die Struktur eine elastische Deformation des Dichtungskörpers (26) für einen verstärkten und dosierten Dichtungsanpressdruck zwischen Kolben (16,17) und Zylinder bewirkt,
**dadurch gekennzeichnet, dass**
der Dichtungskörper (26) mit Axialspiel auf dem Sitz (60) angeordnet ist, und dass der Sitz (60) wenigstens zwei Abschnitte (65,66) aufweist, von denen ein erster Sitzabschnitt im Wesentlichen zylindrisch ausgebildet ist, und wobei ein zweiter Sitzabschnitt in einer Axialrichtung Ax konifiziert ausgebildet ist.

2. Kolbenpumpe nach dem Oberbegriff von Anspruch 1,
**dadurch gekennzeichnet, dass**
der Sitz (60) wenigstens zwei Abschnitte (65,66) aufweist, von denen ein erster Sitzabschnitt eine Struktur mit einer intermittierenden Auflagefläche für den Dichtungskörper (26) aufweist, und wobei ein zweiter Sitzabschnitt in einer Axialrichtung Ax konifiziert ausgebildet ist, und der Dichtungskörper (26) mit Axialspiel auf dem Sitz (60) angeordnet ist.

3. Kolbenpumpe nach Anspruch 2, **dadurch gekennzeichnet, dass** die Struktur von dem Sitz (60) relative Maxima (62) sowie relative Minima (63) aufweist, und dass die relativen Maxima (62) sowie die relativen Minima (63) in Umfangsrichtung und/oder parallel zur Kolbenachse in regelmäßigem oder unregelmäßigem Abstand abwechselnd angeordnet sind.

4. Kolbenpumpe nach Anspruch 3, **dadurch gekennzeichnet, dass** die Maxima (62) ringförmig umlaufend an dem Sitz (60) ausgebildet sind.

5. Kolbenpumpe nach Anspruch 3, **dadurch gekennzeichnet, dass** die Minima (63) durch Nuten gebildet sind, die sich parallel oder konzentrisch zur Kolbenachse erstrecken.

6. Kolbenpumpe nach Anspruch 1 oder 2, **dadurch gekennzeichnet, dass** der Sitz (60) Mittel aufweist, die mit zunehmendem hydraulischen Druck einen zunehmenden Dichtungsanpressdruck ermöglichen, und umgekehrt, wobei die Mittel insbesondere kanalartig ausgebildet und zum Verdrängungsraum (24) offen sind, und insbesondere in die Struktur integriert ausgebildet sind.

## Claims

1. Piston pump (10) for hydraulic energy supply in a regulated vehicle brake system, having the features:
a piston (16, 17) is arranged movably in a cylinder of a stepped bore (64) of a reception body (3), the said stepped bore being provided with a closure (52),
the piston (16, 17) is of at least partially hollow design with a tubular portion and carries a valve seat for at least one non-return valve (32, 33, 36, 37) which is arranged at least partially in the hollow portion and which serves for ventilating a working space (24, 25),
the piston (16, 17) carries a seat (60) for an elastic sealing body (26), which seat receives the sealing body (26) with radial elastic prestress for the purpose of sealing off between the piston (16, 17) and cylinder, and a return spring (41) is provided in the cylinder and acts, on the one hand, upon an abutment (47) and, on the other hand, upon the piston (16, 17),
the seat (60) for the sealing body (26) is provided with a structure which generates forces directed radially with respect to a piston axis and radially widening the sealing body (26), and the structure causes an elastic deformation of the sealing body (26) for a reinforced and metered sealing pressure force between the piston (16, 17) and the cylinder,
**characterized in that**
the sealing body (26) is arranged with axial play on the seat (60), and **in that** the seat (60) has at least two portions (65, 66), a first seat portion of which is of essentially cylindrical design, a second seat portion being designed to be conicised in an axial direction Ax.

2. Piston pump according to the precharacterizing clause of Claim 1,
**characterized in that**
the seat (60) has at least two portions (65, 66), a first seat portion of which has a structure with an intermittent bearing face for the sealing body (26), a second seat portion being designed to be conicised in an axial direction Ax, and the sealing body (26) being arranged with axial play on the seat (60).

3. Piston pump according to Claim 2, **characterized in that** the structure of the seat (60) has relative maxima (62) and relative minima (63), and **in that** the relative maxima (62) and the relative minima (63) are arranged alternatively at a regular or irregular interval in the circumferential direction and/or parallel to the piston axis.

4. Piston pump according to Claim 3, **characterized in that** the maxima (62) are designed to run around annularly on the seat (60).

5. Piston pump according to Claim 3, **characterized in that** the minima (63) are formed by grooves which extend parallel or concentrically with respect to the piston axis.

6. Piston pump according to Claim 1 or 2,
**characterized in that** the seat (60) has means which allow an increasing sealing pressure force with an increasing hydraulic pressure, and vice versa, the means being, in particular, of duct-like design and being open to the displacement space (24), and, in particular, being designed to be integrated into the structure.

## Revendications

1. Pompe à piston (10) pour l'alimentation en énergie hydraulique dans une installation de frein de véhicule régulée, comprenant les caractéristiques suivantes :
un piston (16, 17) est disposé de manière mobile dans un cylindre d'un alésage étagé (64) d'un corps de logement (3), pourvu d'une fermeture (52),
le piston (16, 17) est réalisé sous forme au moins partiellement creuse avec une portion tubulaire, et porte un siège de soupape pour au moins un clapet antiretour (32, 33, 36, 37) disposé au moins en partie dans la portion creuse, qui sert à la ventilation d'un espace de travail (24, 25),
le piston (16, 17) porte un siège (60) pour un corps d'étanchéité élastique (26), qui reçoit le corps d'étanchéité (26) avec une précontrainte élastique radiale afin de réaliser l'étanchéité entre le piston (16, 17) et le cylindre, un ressort de rappel (41) est prévu dans le cylindre et sollicite d'une part une butée (47) et d'autre part le piston (16, 17),
le siège (60) pour le corps d'étanchéité (26) est pourvu d'une structure qui produit des forces orientées radialement par rapport à un axe du piston et élargissant radialement le corps d'étanchéité (26), et la structure provoque une déformation élastique du corps d'étanchéité (26) pour une pression accrue et dosée d'application d'étanchéité entre le piston (16, 17) et le cylindre,
**caractérisée en ce que**
le corps d'étanchéité (26) est disposé avec un jeu axial sur le siège (60) et **en ce que** le siège (60) présente au moins deux portions (65, 66) dont une première portion de siège est réalisée essentiellement sous forme cylindrique, une deuxième portion de siège étant réalisée sous forme conique dans une direction axiale Ax.

2. Pompe à piston selon le préambule de la revendication 1,
**caractérisée en ce que**
le siège (60) présente au moins deux portions (65, 66) dont une première portion de siège présente une structure avec une surface d'appui intermittente pour le corps d'étanchéité (26), une deuxième portion de siège étant réalisée sous forme conique dans une direction axiale Ax et le corps d'étanchéité (26) étant disposé avec un jeu axial sur le siège (60).

3. Pompe à piston selon la revendication 2, **caractérisée en ce que** la structure du siège (60) présente des maxima relatifs (62) et des minima relatifs (63), et **en ce que** les maxima relatifs (62) ainsi que les minima relatifs (63) sont disposés en alternance dans la direction périphérique et/ou parallèlement à l'axe du piston à distance régulière ou irrégulière.

4. Pompe à piston selon la revendication 3, **caractérisée en ce que** les maxima (62) sont disposés sur le siège (60) en position annulaire périphérique.

5. Pompe à piston selon la revendication 3, **caractérisée en ce que** les minima (63) sont formés par des rainures qui s'étendent parallèlement ou concentriquement à l'axe du piston.

6. Pompe à piston selon la revendication 1 ou 2, **caractérisée en ce que** le siège (60) présente des moyens qui permettent, avec une pression hydraulique croissante, d'obtenir une pression croissante d'application d'étanchéité et inversement, les moyens étant notamment réalisés en forme de canaux et étant ouverts vers l'espace de refoulement (24), et étant réalisés notamment de manière intégrée dans la structure.
